(19) Europäisches Patentamt
European Patent Office
Office européen des brevets

(11) Veröffentlichungsnummer : **0 197 001**
**B1**

(12) # EUROPÄISCHE PATENTSCHRIFT

(45) Veröffentlichungstag der Patentschrift : **19.10.88**

(51) Int. Cl.⁴ : **D 06 P 1/613**, C 08 L 71/02, D 06 M 15/53

(21) Anmeldenummer : **86810107.2**

(22) Anmeldetag : **03.03.86**

(54) **Hilfsmittelgemisch und seine Verwendung als Färberei- oder Textilhilfsmittel.**

(30) Priorität : **07.03.85 CH 1024/85**

(43) Veröffentlichungstag der Anmeldung : **08.10.86 Patentblatt 86/41**

(45) Bekanntmachung des Hinweises auf die Patenterteilung : **19.10.88 Patentblatt 88/42**

(84) Benannte Vertragsstaaten : **BE CH DE FR GB IT LI**

(56) Entgegenhaltungen :
**EP-A- 0 014 689**
**DE-A- 2 802 305**
**FR-A- 2 313 958**
**FR-A- 2 324 718**
**FR-A- 2 446 350**
**GB-A- 2 041 388**

(73) Patentinhaber : **CIBA-GEIGY AG**
**Klybeckstrasse 141**
**CH-4002 Basel (CH)**

(72) Erfinder : **Töpfl, Rosemarie**
**Dorneckstrasse 68**
**CH-4143 Dornach (CH)**
Erfinder : **Abel, Heinz**
**Egertenstrasse 5**
**CH-4153 Reinach (CH)**

**EP 0 197 001 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft ein neues Hilfsmittelgemisch und seine Verwendung als Färberei- oder Textilhilfsmittel und besonders als Netzmittel.

Aus der FR-A-2 319 858 sind anionische Tenside bekannt, die in Kombination mit Fettalkoholen oder deren Ethoxylierungsprodukten und vor allem auch mit bis zu 30 Gewichtsprozent Silikonöl als Netz- und Schaumdämpfungsmittel für wässerige Systeme verwendet werden. Als anionische Tenside können laut Formel (1) saure Ester von Anlagerungsprodukten von 1 bis 20 Mol Alkylenoxid an Fettalkohole oder Alkylphenole mit einer anorganischen, Sauerstoff enthaltenden Säure oder einer Carbonsäure eingesetzt werden. Bei den Alkylenoxideinheiten handelt es sich um Ethylenoxid- und 1,2-Propylenoxideinheiten, wobei letztere im Gemisch mit Ethylenoxideinheiten in den anionischen Tensiden vorhanden sein können. Gemäss Formel (2) beträgt das Verhältnis von Ethylenoxid zu Propylenoxid 1 : (1 bis 2), vorzugsweise 1 : 1. Derartige anionische Tenside, die jedoch in Detachiermitteln eingesetzt werden, werden auch in der FR-A-2 324 718 offenbart. Ferner werden in der FR-A-2 446 350 Anlagerungsprodukte von 1 bis 60 Mol Ethylenoxid und/oder Propylenoxid an Fettamine, Fettsäuren oder Fettalkohole je mit 8 bis 22 Kohlenstoffatomen beschrieben, die mit einer organischen Dicarbonsäure, wie z. B. Maleinsäure, Malonsäure oder Sulfobernsteinsäure, vorzugsweise jedoch mit einer anorganischen mehrbasischen Säure, wie o-Phosphorsäure oder insbesondere Schwefelsäure in einen sauren Ester übergeführt worden sind. In diesem Falle werden die sauren Ester als anionische Dispergiermittel verwendet.

Es wurden nun neue Gemische aus sauren Estern von Fettalkoholmischethern gefunden, die als Färberei- oder Textilhilfsmittel und insbesondere als Netzmittel gut geeignet sind und vor allem kein störendes Schäumen bewirken. Dabei sind die sauren Ester dadurch gekennzeichnet, dass sie durch Anlagerung zuerst von Ethylenoxid und dann von Propylenoxid in bestimmten Verhältnissen und mit anschliessender Veresterung der Anlagerungsprodukte zum Teil mit einer aliphatischen Dicarbonsäure und zum Teil mit einer anorganischen, Sauerstoff enthaltenden Säure erhältlich sind.

Gegenstand der vorliegenden Erfindung ist demnach ein Hilfsmittelgemisch aus sauren Estern von Anlagerungsprodukten von Ethylenoxid und Propylenoxid, welches dadurch gekennzeichnet ist, dass es aus mindestens einem sauren Ester der Formel (1)

$$R-O-(CH_2CH_2O)_s-(\underset{Z_1}{CH}-\underset{Z_2}{CH}-O)_p-X \qquad (1)$$

worin

s 3 bis 10, p 5 bis 15, vorzugsweise s 4 bis 8, p 10 bis 15,

R einen aliphatischen Rest mit mindestens 6 Kohlenstoffatomen, von

$Z_1$ und $Z_2$ eines Methyl und das andere Wasserstoff und

X den Säurerest einer niedermolekularen aliphatischen Dicarbonsäure, welche vorzugsweise 3 bis 5 Kohlenstoffatome enthält, wie z. B. Maleinsäure, Bernsteinsäure oder Sulfobernsteinsäure

bedeuten und mindestens einem sauren Ester der Formel

$$R_1-O-(CH_2CH_2O)_m-(\underset{Z_1}{CH}-\underset{Z_2}{CH}-O)_n-X_1 \qquad (2)$$

worin

m 3 bis 10, n 5 bis 15, vorzugweise m 4 bis 8, n 6 bis 12,

$R_1$ einen aliphatischen Rest mit mindestens 6 Kohlenstoffatomen oder Alkylphenyl mit 4 bis 16 Kohlenstoffatomen im Alkylteil, von

$Z_1$ und $Z_2$ eines Methyl und das andere Wasserstoff und

$X_1$ den Säurerest einer anorganischen, Sauerstoff enthaltenden Säure, wie z. B. Phosphorsäure oder vorzugsweise Schwefelsäure

bedeuten, besteht.

Die Säurerest X und $X_1$ sind über eine Esterbrücke mit dem Propylenoxyteil des Moleküls verbunden und liegen vorzugsweise in Salzform, d. h z. B als Alkalimetall-, Ammonium- oder Aminsalz vor. Beispiele für solche Salze sind Lithium-, Natrium-, Kalium-, Ammonium-, Trimethylamin-, Ethanolamin-, Diethanolamin- oder Triethanolaminsalze.

Jede der Komponenten der Formeln (1) und (2) kann als Einzelverbindung oder als Gemisch vorhanden sein. R und $R_1$ stellen vorteilhafterweise Kohlenwasserstoffreste eines ungesättigten oder vorzugsweise gesättigten aliphatischen Monoalkohols mit 6 bis 24 Kohlenstoffatomen dar. Die Kohlenwasserstoffreste können geradkettig oder verzweigt sein. Als aliphatische gesättigte Alkohole können natürliche Alkohole, wie z. B. Laurylalkohol, Myristylalkohol, Cetylalkohol, Stearylalkohol, Arachidylalkohol oder Behenylalkohol, sowie synthetische Alkohole, z. B. Oxo-Alkohole wie insbesondere 2-Ethylbutanol, 2-Methylpentanol, Hexanol, Heptanol, 5-Methylheptan-3-ol, Octan-2-ol, Trimethylnonylalkohol, Decanol, Hexadecylalkohol oder Alfole in Betracht kommen. Einige Vertreter der Alfole sind Alfol (8-10), Alfol (9-11), Alfol (11-13), Alfol (10-14), Alfol (12-13) oder Alfol (16-18), («Alfol» ist ein eingetragenes Warenzeichen).

Ungesättigte aliphatische Alkohole sind beispielsweise Dodecenylalkohol, Hexadecenylalkohol oder Oleylalkohol.

Die Alkoholreste können allein oder als Gemische vorhanden sein. Der Alkylrest im Alkylphenyl von $R_1$ befindet sich vorzugsweise in para-Stellung. Die Alkylreste im Alkylphenyl können Butyl, Hexyl, n-Octyl, n-Nonyl, p-tert.Octyl, p-iso-Nonyl, Decyl oder Dodecyl sein. Bevorzugt sind die Alkylreste mit 8 bis 12 Kohlenstoffatomen, insbesondere die Octyl- oder Nonylreste.

R und $R_1$ bedeuten vorzugsweise je Alkyl mit 8 bis 18 Kohlenstoffatomen. X ist vorzugsweise der Maleinsäurerest, während $X_1$ bevorzugt der Schwefelsäurerest ist.

Sowohl die sauren Ester der Formel (1) als auch die sauren Ester der Formel (2) leiten sich von Fettalkoholmischethern (Blockpolymerisaten), die vorteilhafterweise aus 20 bis 55 Gewichtsprozent sich von Ethylenoxid und 45 bis 80 Gewichtsprozent sich von Propylenoxid ableitenden Einheiten aufgebaut sind.

Die Herstellung der anionischen Blockpolymerisate der Formeln (1) und (2) erfolgt nach bekannten Methoden, indem man an die genannten Fettalkohole, die als Grundstoffe dienen, alternierend Ethylenoxid und Propylenoxid anlagert und anschliessend die Anlagerungsprodukte mit der entsprechenden Säure oder deren funktionellen Derivaten, wie z. B. Säureanhydride, Säurehalogenide, Säureester oder Säureamide verestert und gewünschtenfalls die Ester in ihre Salze überführt.

Praktisch wichtige, sich von organischen Säuren ableitenden saure Ester entsprechen der Formel

$$R'-O-(CH_2CH_2O)_{s_1}-(\underset{\displaystyle CH_3}{CH_2-\underset{|}{C}HO})_{p_1}-X' \qquad (3)$$

worin

R' Alkyl mit 8 bis 18 Kohlenstoffatomen,

X' den Maleinsäurerest oder den Sulfobernsteinsäurerest,

$s_1$ 4 bis 8 und $p_1$ 10 bis 15

bedeuten.

Bevorzugte anionische Tenside mit anorganischem Säurerest entsprechen der Formel

$$R_2-O-(CH_2CH_2O)_{m_1}-(\underset{\displaystyle CH_3}{CH_2-\underset{|}{C}HO})_{n_1}-X_2 \qquad (4)$$

worin

$R_2$ Alkyl mit 8 bis 18 Kohlenstoffatomen,

$X_2$ den Schwefelsäurerest,

$m_1$ 4 bis 8 und $n_1$ 6 bis 12

bedeuten.

Die neuen Hilfsmittelgemische können durch einfaches Verrühren der entsprechenden sauren Ester und insbesondere der genannten sauren Ester der Formeln (1) und (2) hergestellt werden, wobei homogene klare Mischungen erhalten werden, die bei Raumtemperatur lagerstabil sind.

Die sauren Ester der Formeln (1) und (2) liegen in der Regel in einem Gewichtsverhältnis von 9 : 1 bis 1 : 1, vorzugsweise 9 : 1 bis 3 : 1 und insbesondere 5 : 1 bis 3 : 1 vor.

Die neuen Hilfsmittelgemische eignen sich für die verschiedensten Zwecke in der Textilapplikation, wie z. B. Vorbehandlung, Färben oder Ausrüstung. Insbesondere werden sie als Netzmittel beim Färben von natürlichem oder synthetischem Fasermaterial und vor allem beim Färben von Cellulose-Textilmaterialien verwendet. Sie schäumen nicht, verbessern das Aufziehvermögen der Farbstoffe und beschleunigen dadurch die Diffusion der Farbstoffe in den Fasern.

Gegenstand der vorliegenden Erfindung ist demnach auch ein Verfahren zum Veredeln von natürlichem oder synthetischem Fasermaterial mit oder ohne entsprechende Farbstoffe, wobei die Veredlung in Gegenwart der erfindungsgemässen Hilfsmittelgemische durchgeführt wird.

Die Einsatzmengen, in denen die Erfindungsgemässen Hilfsmittelgemische den Veredlungsflotten, wie z. B. Färbeflotten oder Vorbehandlungsflotten zugesetzt werden, bewegen sich, je nach Substrat, zweckmässigerweise zwischen 1 bis 20 g, vorzugsweise 2 bis 10 g, pro Liter Flotte.

Die erfindungsgemässen Hilfsmittelgemische eignen sich insbesondere für das kontinuierliche oder halbkontinuierliche Färben von Textilien, die aus Cellulose bestehen oder diese enthalten, mit substantiven Farbstoffen oder vorzugsweise Reaktivfarbstoffen, wobei die Cellulosematerialien nach der Imprä-

gnierung einem Hitzebehandlungsprozess unterworfen werden können, um die applizierten Farbstoffe zu fixieren. Vorzugsweise erfolgt die Fixierung der Farbstoffe nach der Kaltverweilmethode.

Als Cellulosefasermaterial kommt solches aus regenerierter oder insbesondere natürlicher Cellulose in Betracht, wie z. B. Zellwolle, Viskoseseide, Hanf, Leinen, Jute oder vorzugsweise Baumwolle, sowie Fasermischungen z. B. solche aus Polyamid/Baumwolle oder insbesondere aus Polyester/Baumwolle, wobei der Polyesteranteil mit Dispersionsfarbstoffen vor-, gleichzeitig oder nachgefärbt werden kann.

Das Textilgut ist in jeglicher Form anwendbar, wie z. B. Garne, Garnstränge, Gewebe, Gewirke, Filze, vorzugsweise in Form von textilen Flächengebilden, wie Gewebe, Maschenware oder Teppich, die ganz oder teilweise aus nativer, regenerierter oder modifizierter Cellulose bestehen. Es kann sowohl rohe als auch vorbehandelte Ware verwendet werden.

Als Substantivfarbstoffe sind die üblichen Direktfarbstoffe geeignet, beispielsweise die in Colour Index, 3. Auflage (1971) Band 2 auf den Seiten 2005-2478 genannten « Direct Dyes ».

Unter Reaktivfarbstoffen werden die üblichen Farbstoffe verstanden, welche mit der Cellulose eine chemische Bindung eingehen, z. B. die in Colour Index, in Band 3 (3. Auflage, 1971) auf den Seiten 3391-3560 und in Band 6 (revidierte 3. Auflage, 1975) auf den Seiten 6268-6345 aufgeführten « Reactive Dyes ». Küpenfarbstoffe können auch verwendet werden.

Die Menge der Farbstoffe richtet sich in der Regel nach der gewünschten Farbstärke und beträgt zweckmässig 0,1 bis 80 g pro Liter Flotte, vorzugsweise 2 bis 50 g/l Flotte.

Bei Verwendung von Reaktivfarbstoffen enthalten die Zubereitungen in der Regel Fixieralkalien.

Als alkalisch reagierende Verbindungen zur Fixierung der Reaktivfarbstoffe werden beispielsweise Natriumcarbonat, Natriumbicarbonat, Natriumhydroxid, Dinatriumphosphat, Trinatriumphosphat, Borax, wässeriges Ammoniak oder Alkalispender, wie z. B. Natriumtrichloracetat eingesetzt. Als Alkali hat sich insbesondere eine Mischung aus Wasserglas und einer 30 %igen wässerigen Natriumhydroxidlösung sehr gut bewährt..

Der pH-Wert der Alkali enthaltenden Färbeflotten beträgt in der Regel 7,5 bis 13,2 vorzugsweise 8,5 bis 11,5.

Die Färbeflotten werden zweckmässigerweise durch Lösen der Farbstoffes und durch Zusatz der erfindungsgemässen Hilfsmittelgemische und gegebenenfalls von Alkali vorbereitet. Je nach dem verwendeten Farbstoff können die Färbeflotten weitere übliche Zusätze enthalten, z. B. Elektrolyte, wie z. B. Natriumchlorid oder Natriumsulfat sowie auch Sequestrierungsmittel, Reduktionsschutzmittel, wie z. B. Nitrobenzolsulfonsäure-Natriumsalz ferner Harnstoff, Glycerin und/oder Natriumformiat. Gegebenenfalls können auch Verdickungsmittel, wie z. B. Alginate, Cellulosederivate, Stärkeether oder Kernmehlether wie Johannisbrotkernmehlether darin enthalten sein. Entschäumer, wie z. B. Silikonöle sind nicht erforderlich.

Es hat sich vielfach als vorteilhaft erwiesen den Färbeflotten die erfindungsgemässen Hilfsmittelgemische zusammen mit Homopolymerisaten oder Copolymerisaten des Acrylamids oder Methacrylamids oder Pfropfpolymerisaten, welche aus einem Anlagerungsprodukt von einem Alkylenoxid an einen mindestens dreiwertigen aliphatischen Alkohol mit 3 bis 10 Kohlenstoffatomen und Acrylamid oder Methacrylamid erhältlich sind, zuzusetzen. Dabei kann die Färbeflotte auch Mischungen der genannten Polymerisate enthalten.

Dabei sind Pfropfpolymerisate bevorzugt, welche durch Pfropfpolymerisation von Methacrylamid oder insbesondere Acrylamid auf ein Anlagerungsprodukt von 4 bis 100 Mol, vorzugsweise 40 bis 80 Mol Propylenoxid an 3 bis 6 Kohlenstoffatome aufweisende drei- bis sechswertige Alkanole erhältlich sind. Diese Alkanole können geradkettig oder verzweigt sein. Als Beispiele seien Glycerin, Trimethylolethan, Trimethylolpropan, Erythrit, Pentaerythrit, Mannit oder Sorbit genannt.

Die Pfropfpolymerisate enthalten vorzugsweise 2,5 bis 30 Gew.-% des Alkylenoxidadduktes und 70 bis 97,5 Gew.-% aufgepfropftes Methacrylamid oder insbesondere Acrylamid. Noch bevorzugter beträgt der Amidanteil 80 bis 97,5 Gew.-%, bezogen auf das Pfropfpolymerisat.

Weitere Einzelheiten über die Natur dieser Pfropfpolymerisate einschliesslich ihrer Herstellung sind in EP-A-111 454 beschrieben.

Die Imprägnierung des cellulosehaltigen Textilgutes kann durch Auftragen, Besprühen oder vorzugsweise durch Klotzen der Färbeflotte erfolgen.

Nach der Imprägnierung werden die Farbstoffe durch Hitzeeinwirkung oder nach der Kalt-Verweilmethode fixiert.

Die Thermofixierstufe kann durch ein Dämpfverfahren, ein Warmverweilverfahren, einen Thermosolierprozess oder durch eine Mikrowellenbehandlung durchgeführt werden.

Beim Dämpfverfahren werden die mit der Färbeflotte imprägnierten Textilmaterialien zur Fixierung der Farbstoffe einer Behandlung in einem Dämpfer mit gegebenenfalls überhitzten Dampf, zweckmässigerweise bei einer Temperatur von 98 bis 210 °C, vorteilhafterweise 100 bis 180 °C und vorzugsweise 102 bis 120 °C unterzogen.

Beim Warmverweilverfahren lässt man die imprägnierte Ware im feuchten Zustand z. B. 5 bis 120 Minuten lang, vorteilhafterweise bei Temperaturen von 85 bis 102 °C verweilen. Hierbei kann die benetzte Ware durch eine Infrarot-Behandlung auf 85 bis 102 °C vorgeheizt werden. Bevorzugt beträgt die Verweiltemperatur 95 bis 100 °C.

Die Fixierung der Farbstoffe durch den sogenannten Thermosolierprozess kann nach einer oder

ohne Zwischentrocknung z. B. bei einer Temperatur von 100 bis 210 °C erfolgen. Vorzugsweise erfolgt die Thermosolierung bei einer Temperatur von 120 bis 220 °C, vorzugsweise 140 bis 180 °C und nach einer Zwischentrocknung bei 80 bis 120 °C der imprägnierten Ware. Je nach der Temperatur kann die Thermosolierung 20 Sekunden bis 5 Minuten, vorzugsweise 30 bis 60 Sekunden dauern.

Die Thermofixierung der Farbstoffe kann mittels Mikrowellen durchgeführt werden. Hierbei wird die Ware nach Imprägnierung mit der Färbeflotte zweckmässigerweise aufgerollt und in einer Kammer mittels Mikrowellen behandelt.

Die Mikrowellenbehandlung kann 2 bis 120 Minuten dauern. Vorzugsweise reichen 2 bis 15 Minuten aus. Als Mikrowellen bezeichnet man elektromagnetische Wellen (Radiowellen) im Frequenzbereich von 300 bis 100 000 MHz, vorzugsweise 1 000 bis 30 000 MHz.

Die Fixierung der Farbstoffe gemäss dem Kaltverweilverfahren erfolgt zweckmässigerweise durch Lagerung der imprägnierten und vorzugsweise abgetafelten oder aufgerollten Ware bei Raumtemperatur (15 bis 30 °C) z. B. während 3 bis 24 Stunden, wobei die Kaltverweilzeit bekanntlich Farbstoff abhängig ist. Gegebenenfalls kann auch bei leicht erhöhter Temperatur (30 bis 80 °C) gelagert werden.

Im Anschluss an den Färbeprozess kann man das gefärbte Cellulosematerial in üblicher Weise auswaschen, um nichtfixierten Farbstoff zu entfernen. Man behandelt dazu das Substrat beispielsweise bei 40 °C bis Kochtemperatur in einer Lösung, die Seife oder synthetisches Waschmittel enthält. Anschliessend kann zur Verbesserung der Nassechtheiten eine Behandlung mit einem Fixiermittel erfolgen.

Man erhält mit dem erfindungsgemässen Verfahren egale und farbkräftige Färbungen, die sich durch ein ruhiges Warenbild auszeichnen. Desweiteren werden die Gebrauchsechtheiten der gefärbten Ware, wie z. B. Lichtechtheit, Reibechtheit und Nassechtheiten durch den Einsatz des definierten Hilfsmittelgemisches nicht negativ beeinflusst.

Insbesondere kann eine hervorragende Durchfärbung der Ware, auch auf Rohware erreicht werden.

In den folgenden Herstellungsvorschriften und Beispielen beziehen sich die Prozentansätze, wenn nichts anderes angegeben ist, auf das Gewicht. Die Mengen beziehen sich bei den Farbstoffen auf handelsübliche, d. h. coupierte Ware und bei den Hilfsmitteln auf Reinsubstanz. Die fünfstelligen Colour-Index Nummern (C. I.) beziehen sich auf die 3. Auflage des Colour-Index.

Herstellungsvorschriften

A. 98 g Maleinsäureanhydrid werden in Stickstoffatmosphäre bei 60-70 °C geschmolzen. Hierauf lässt man 1 032 g eines Anlagerungsproduktes von 4 Mol Ethylenoxid und 12 Mol Propylenoxid an 1 Mol $C_9$-$C_{11}$-Fettalkohol im Verlaufe von 35 Minuten zutropfen, wobei die Temperatur auf 75 °C ansteigt. Man steigert die Temperatur im Verlaufe von 20 Minuten auf 90 °C und rührt 3 1/2 Stunden bei dieser Temperatur. Danach wird das Reaktionsprodukt auf Raumtemperatur abgekühlt. Man erhält 1 129 g des Maleinsäurehalbersters der Formel

$$C_9\text{-}C_{11}/H_{19}\text{-}H_{23}\text{-}O\text{-}(CH_2CH_2O)_4\text{-}(CH_2\text{-}\underset{CH_3}{CH}\text{-}O)_{12}\text{-}\underset{O}{\overset{}{C}}\text{-}CH{=}\underset{COOH}{CH} \qquad (11)$$

Die Säurezahl beträgt 47.8.

Anschliessend werden 134 g einer wässerigen Natriumhydroxidlösung (30 %) mit 1 594 g Wasser verdünnt und auf 10 °C abgekühlt. Danach lässt man bei 20 °C 1 129 g des Maleinsäurehalbesters der Formel (11) in die verdünnte Lösung zufliessen. Man erhält 2 858 g einer klaren 40 %igen Lösung des Natriumsalzes des Maleinsäurehalbesters der Formel (11). Der pH-Wert beträgt 6.7.

B. 12,75 g Maleinsäureanhydrid werden in Stickstoffatmosphäre bei 60-70 °C geschmolzen. Hierauf lässt man 134 g eines Anlagerungsproduktes von 4 Mol Ethylenoxid und 12 Mol Propylenoxid an 1 Mol $C_9$-$C_{11}$-Fettalkohol im Verlaufe von 30 Minuten zutropfen, wobei die Temperatur auf 75 °C ansteigt. Man steigert die Temperatur innerhalb von 10 Minuten auf 90 °C und rührt 3 Stunden bei dieser Temperatur. Danach wird das Reaktionsprodukt abgekühlt. Man erhält 146 g des Maleinsäurehalbesters der Formel (11). Die Säurezahl beträgt 47.9.

140 g dieses Maleinsäurehalbesters werden mit 155,5 g einer wässrigen Natriumbisulfitlösung (40 %) gemischt und 6 Stunden bei 95 °C gerührt. Nach Abkühlen bilden sich 2 Phasen, worauf die überschüssige Natriumbisulfitlösung (anorganische Phase) abgetrennt wird. Die organische Phase wird zur Trockene eingedampft. Man erhält 153 g einer viskosen Masse der Formel

$$C_{9-11}H_{19-23}\text{-}O\text{-}(CH_2CH_2O)_4(\underset{CH_3}{CH_2CHO})_{12}\text{-}\underset{O}{C}\text{-}CH_2\text{-}\underset{SO_3Na}{CH}\text{-}COOH \qquad (12)$$

Nach Verdünnen mit Wasser wird eine 50 %ige Lösung hergestellt, die einen pH-Wert von 4,9 aufweist.

C. 16,7 g Maleinsäureanhydrid werden in Stickstoffatmosphäre bei 60-70 °C geschmolzen. Hierauf lässt man 211,5 g des Anlagerungsproduktes von 8 Mol Ethylenoxid und 12 Propylenoxid an 1 Mol $C_{12}$-$C_{13}$-Fettalkohol im Verlaufe von 30 Minuten zutropfen, wobei die Temperatur auf 80 °C ansteigt. Man steigert die Temperatur innerhalb von 10 Minuten auf 90 °C und rührt 1 1/2 Stunden bei dieser Temperatur. Danach wird das Reaktionsprodukt auf Raumtemperatur abgekühlt. Man erhält 228 g des Maleinsäurehalbesters der Formel

$$C_{12-13}H_{25-27}-O(CH_2CH_2O)_8-(CH_2\underset{\displaystyle CH_3}{\underset{|}{C}}H-O)_{12}-\underset{\displaystyle O}{\underset{\|}{C}}-CH=\underset{\displaystyle COOH}{\underset{|}{C}}H \qquad (13)$$

Die Säurezahl beträgt 41.4.

195 g dieses Maleinsäurehalbesters werden mit 187,2 g einer wässrigen Natriumbisulfitlösung (40 %) gemischt und 6 Stunden bei 95 °C gerührt. Man kühlt ab, worauf sich 2 Phasen bilden. Die überschüssige Natriumbisulfitlösung wird abgetrennt und der Rest zur Trockene eingedampft. Man erhält 200 g eines Sulfosuccinates in Form einer viskosen Masse der Formel

$$C_{12-13}-H_{25-27}-O(CH_2CH_2O)_8-(CH_2\underset{\displaystyle CH_3}{\underset{|}{C}}HO)_{12}-\underset{\displaystyle O}{\underset{\|}{C}}-CH_2-\underset{\displaystyle SO_3Na}{\underset{|}{C}}H-COOH \qquad (14)$$

Durch Verdünnen mit Wasser wird eine 50 %ige Lösung hergestellt, die einen pH-Wert von 5,5 aufweist.

D. 1 142 g des Anlagerungsproduktes von 7 Mol Ethylenoxid und 6 Mol Propylenoxid an 1 Mol $C_9$-$C_{11}$-Alkohol werden in Stickstoffatmosphäre auf 12 °C abgekühlt. Hierauf werden 163,1 g Chlorsulfonsäure über ein Mikrodosiergerät im Verlauf von 5 1/2 Stunden zugegeben, wobei die Temperatur durch Eiskühlung bei 15 °C gehalten und das entstehende Chlorwasserstoffgas entfernt wird. Nach der Zugabe der Chlorsulfonsäure wird das Reaktionsgemisch 1 1/4 Stunden unter Wasserstrahlvakuum (13 mm/Hg) bei 16-17 °C gerührt. Man erhält 1 290 g eines gelblichen, klaren Produktes, das mit einer wässerigen Natriumhydroxidlösung in das Natriumsalz der Formel

$$C_9-C_{11}/H_{19}-H_{23}-O-(CH_2CH_2O)_7-(CH_2\underset{\displaystyle CH_3}{\underset{|}{C}}H-O)_6-SO_3Na \qquad (15)$$

übergeführt wird.

Auf ähnliche Art und Weise wie in Vorschrift D beschrieben werden unter Verwendung der entsprechenden Ausgangsprodukte die folgenden Natriumsalze der Formeln (16), (17), (18) und (19) hergestellt.

$$C_{9-11}H_{19-23}-O-(CH_2CH_2O)_4(CH_2-\underset{\displaystyle CH_3}{\underset{|}{C}}H-O)_{12}-SO_3Na \qquad (16)$$

$$C_{9-11}H_{19-23}-O-(CH_2CH_2O)_7(CH_2-\underset{\displaystyle CH_3}{\underset{|}{C}}H-O)_8-SO_3Na \qquad (17)$$

$$C_{11-13}H_{23-25}-O-(CH_2CH_2O)_8-(CH_2-\underset{\displaystyle CH_3}{\underset{|}{C}}HO)_{12}-SO_3Na \qquad (18)$$

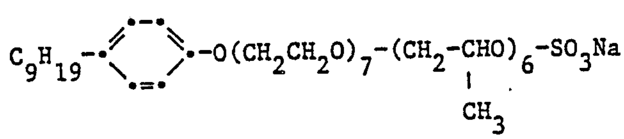

(19)

E. 8,6 g Phosphorpentoxid werden portionenweise im Verlaufe von 30 Minuten zu 219,4 g eines Umsetzungsproduktes aus 1 Mol $C_9$-$C_{11}$-Alkohol mit 8 Mol Ethylenoxid und 12 Mol Propylenoxid zugegeben. Hiernach wird das Reaktionsgemisch auf 50 °C erwärmt und 4 Stunden bei dieser Temperatur gehalten. Anschliessend wird durch ein Gazefilter filtriert. Man erhält 227 g eines Gemisches aus Phosphorsäuremono- und -diester der folgenden Formeln

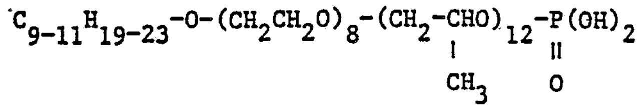
(20)

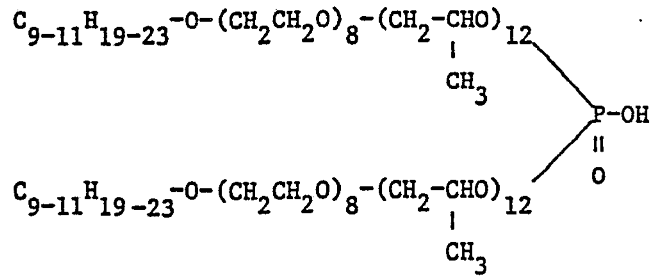
(21)

Mischverhältnis 1 : 2.

## Anwendungsbeispiele

### Beispiel 1

Ein Gewirk aus Rohbaumwolle mit einem Flächengewicht von 165 g/m² wird auf einem Foulard bei 25 °C mit einer wässerigen Flotte, die im Liter

50 g des Farbstoffes der Formel

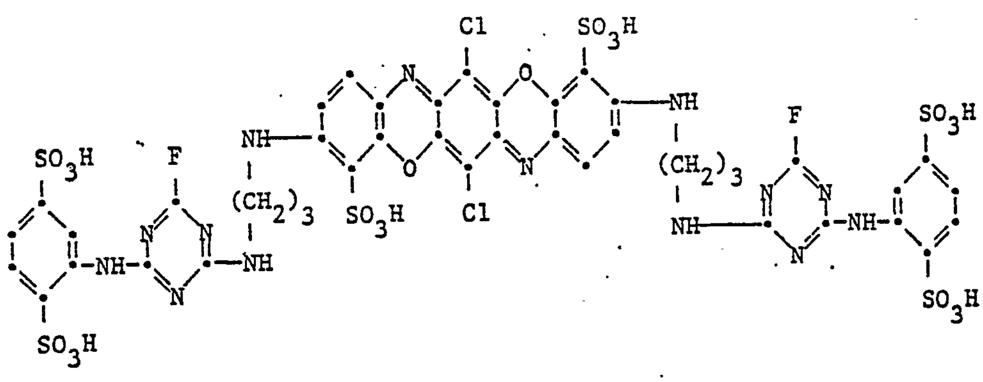
(31)

5 g des Gemisches aus dem Natriumsalz des Maleinsäurehalbesters der Formel (11) und dem Natriumsalz des sulfatierten Polyadduktes der Formel (15) (Mischungsverhältnis 4 : 1),

5 g m-Nitrobenzolsulfonsäure (Natriumsalz),

5 g des gemäss Vorschrift 2 der EP-A-111 454 hergestellten Pfropfpolymerisates,

100 g Harnstoff und

20 g Natriumcarbonat

enthält, imprägniert. Es tritt kein störendes Schäumen auf. Die Flottenaufnahme beträgt 110 %. Hierauf wird die Ware in einem Behälter abgetafelt, luftdicht verschlossen und 6 Stunden bei Raumtemperatur gelagert. Alsdann wird das Gewirk gespült und 10 Minuten bei Kochtemperatur mit einem Waschmittel (0,5 g/l des Additionsproduktes von 9 Mol Ethylenoxid an 1 Mol Nonylphenol) nachgewaschen. Anschliessend wird die Ware nochmals gespült und getrocknet. Man erhält eine egale, farbstarke blaue Färbung.

### Beispiel 2

Baumwollgewebe wird auf einem Foulard mit einer wässerigen Flotte imprägniert, die im Liter

50 g des Farbstoffes der Formel

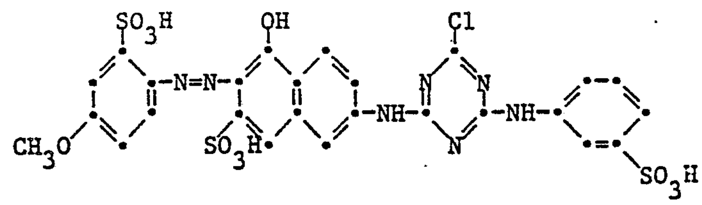

(32)

7 g des Gemisches aus dem Natriumsalz des Maleinsäurehalbesters des Formel (11) und dem Natriumsalz des sulfatierten Polyadduktes der Formel (15) im Mischungsverhältnis 4 : 1,
90 ml Natriumhydroxidlösung (30 %) und
100 ml Natronwasserglaslösung
enthält. Es tritt kein störendes Schäumen auf. Die Flottenaufnahme beträgt 80 %. Hiernach wird das Gewebe 90 Sekunden bei 102 °C gedämpft. Alsdann wird das Gewebe gespült, bei Kochtemperatur nachgewaschen, nochmals gespült und getrocknet.

Man erhält eine farbstarke und egale, rote Färbung.

Beispiel 3

Ein Polyamid-6,6-Teppich mit Polypropylengrundgewebe wird mit einer wässerigen Flotte imprägniert, welche im Liter
10 g des gelben Farbstoffes der Formel

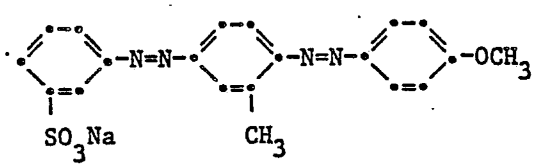

(33)

1,8 g des roten Farbstoffes der Formel

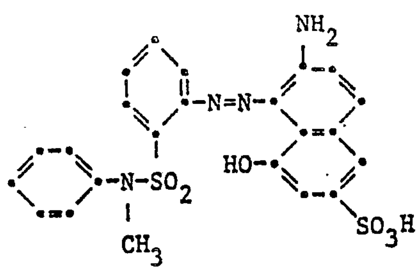

(34)

0,7 g des blauen Farbstoffes der Formel

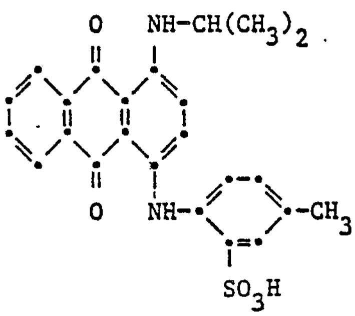

(35)

3 g eines Gemisches aus dem Natriumsalz des Maleinsäurehalbesters der Formel (11) und dem Natriumsalz des sulfatierten Polyadduktes der Formel (15) im Mischungsverhältnis 4 : 1,
3 g einer Mischung aus dem Di-(β-hydroxyethyl) aminsalz des sauren Schwefelsäureesters des Anlagerungsproduktes von 3 Mol Ethylenoxid an 1 Mol Laurylalkohol und Kokosfettsäure-N-di-β-hydroxyethylamid (1 : 1) und
1 g eines Verdickers, wie z. B. Johannisbrotkernmehlether
enthält. Es tritt kein störendes Schäumen auf. Die Flottenaufnahme beträgt 300 %. Hiernach wird der Teppich 10 Minuten bei 102 °C gedämpft. Alsdam wird der Teppich gespült und getrocknet. Man erhält eine farbstarke und egale, olive Färbung.

Beispiel 4

Ein Gewebe aus 67 % Polyester und 33 % Baumwolle wird auf einem Foulard mit einer wässrigen Zubereitung imprägniert, welche im Liter

30 g eines Farbstoffgemisches aus 40 Teilen eines Farbstoffes der Formel

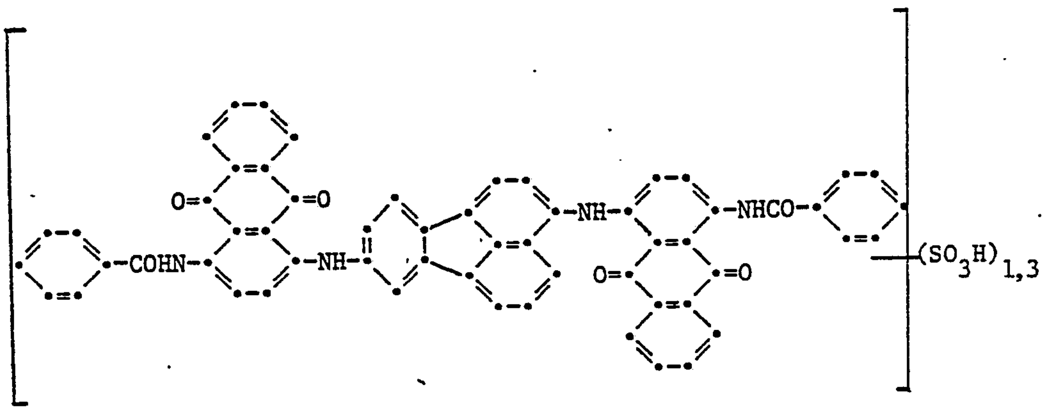

(36)

14 Teilen eines Farbstoffes der Formel

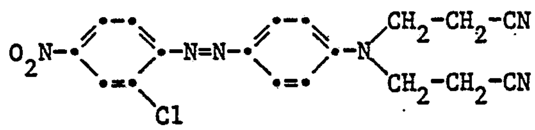

und (37)

12 Teilen eines Farbstoffes der Formel

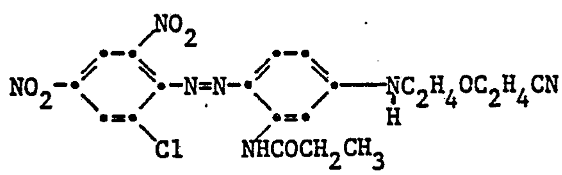

(38)

3 g eines Gemisches aus dem Natriumsalz des Maleinsäurehalbesters der Formel (11) und dem Natriumsalz des sulfatierten Polyadduktes der Formel (15) im Mischungsverhältnis 4 : 1 und

3 g eines Alginatverdickers

enthält. Es tritt kein störendes Schäumen auf. Hierauf wird das Gewebe 2 Minuten bei 120 °C getrocknet und 40 Sekunden bei 220 °C thermosoliert. Hiernach wird das Gewebe auf einem Foulard mit einer wässrigen Flotte bei Raumtemperatur imprägniert, welche im Liter

80 g einer 30 %igen wässerigen Natriumhydroxidlösung,

60 g Natriumhydrosulfit und

10 g Natriumchlorid

enthält. Die Flottenaufnahme beträgt 70 %. Danach wird das Gewebe 60 Sekunden bei 102 °C gedämpft, gespült, mit 5 ml Wasserstoffperoxid 30 Vol.% bei 40 °C oxidiert, anschliessend gespült, geseift, wieder gespült und getrocknet. Man erhält eine egale Färbung.

Beispiel 5

Polyestergewebe wird auf einem Foulard mit einer wässrigen Flotte imprägniert, die im Liter

20 g des Farbstoffes der Formel

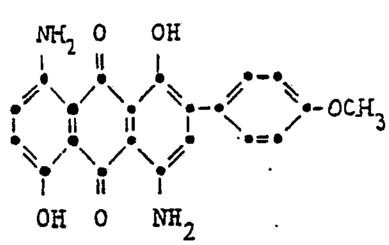

(39)

2 g Natriumalginat und

3 g des Gemisches aus dem Natriumsalz des Maleinsäurehalbesters der Formel (11) und dem gemäss Vorschrift E hergestellten Phosphorsäureestergemisches (Mischungsverhältnis 4 : 1)

enthält. Es tritt kein störendes Schäumen auf. Die Flottenaufnahme beträgt 70 %. Hiernach wird das Gewebe 3 Minuten bei 130 °C getrocknet und 20 Sekunden bei 200 °C thermosoliert. Alsdann wird das Gewebe warm und kalt nachgewaschen und getrocknet. Man erhält eine egale echte blaue Färbung.

Beispiel 6

Baumwollgewebe wird bei 60 °C auf einem Foulard mit einer wässrigen Flotte imprägniert, die im Liter

30 g des Farbstoffes Direct Red 80 C.I. 35780

2 g des Gemisches aus dem Natriumsalz des Sulfobernsteinsäurehalbesters der Formel (12) und dem Natriumsalz des sulfatierten Polyadduktes der Formel (15) im Mischungsverhältnis 9 : 1

100 g Harnstoff und

2 g Natriumalginat

enthält. Es tritt kein störendes Schäumen auf. Die Flottenaufnahme beträgt 80 %. Anschliessend wird die Ware warm und kalt gespült und auf frischem bad bei einem Flottenverhältnis von 1 : 40 auf einer Haspelkufe während 20 Minuten bei 40 °C und pH 6 mit einem kationischen Fixiermittel nachbehandelt. Man erhält eine egale und echte rote Färbung.

Beispiel 7

Ein Gewebe aus Rohbaumwolle wird in einer Strangwaschmaschine im Flottenverhältnis 1 : 30 mit 5 g/l des Gemisches aus dem Natriumsalz des Maleinsäurehalbesters der Formel (11) und dem Natriumsalz des sulfatierten Polyadduktes der Formel (15) (Mischungsverhältnis 4 : 1) während 30 Minuten bei Kochtemperatur und bei einem mit Natriumcarbonat eingestellten pH-Wert von 10 gewaschen. Während der Behandlung tritt kein störendes Schäumen auf. Anschliessend wird das Gewebe warm und kalt gespült und getrocknet.

Als Masstab für die Reinigungswirkung wird ein Tropftest durchgeführt. Zum Vergleich wird der Test mit einem Gewebe durchgeführt das gleich behandelt wurde, aber ohne den Zusatz des obengenannten Hilfsmittelgemisches.

Netzwirkung beim Tropftest

| | |
|---|---|
| unbehandelt | > 5 Minuten |
| nur mit Wasser behandelt | > 5 Minuten |

mit dem Hilfsmittelgemisch behandelt sofort.

Ausserdem bewirkt die Behandlung mit dem Hilfsmittelgemisch eine deutliche Aufhellung der Eigenfarbe des Gewebes.

**Patentansprüche**

1. Hilfsmittelgemisch aus sauren Estern von Anlagerungsprodukten von Ethylenoxid und Propylenoxid, dadurch gekennzeichnet, dass das Gemisch aus mindestens einem sauren Ester der Formel

$$R\text{-}O\text{-}(CH_2CH_2O)_s\text{-}(\underset{Z_1}{CH}\text{-}\underset{Z_2}{CH}\text{-}O)_p\text{-}X \quad (1)$$

worin

s 3 bis 10, p 5 bis 15,

R einen aliphatischen Rest mit mindestens 6 Kohlenstoffatomen, von

$Z_1$ und $Z_2$ eines Methyl und das andere Wasserstoff und

X den Säurerest einer niederen aliphatischen Dicarbonsäure

bedeuten und mindestens einem sauren Ester der Formel

$$R_1\text{-}O\text{-}(CH_2CH_2O)_m\text{-}(\underset{Z_1}{CH}\text{-}\underset{Z_2}{CH}\text{-}O)_n\text{-}X_1 \quad (2)$$

worin

m 3 bis 10, n 5 bis 15,

$R_1$ einen aliphatischen Rest mit mindestens 6 Kohlenstoffatomen oder Alkylphenyl mit 4 bis 16 Kohlenstoffatomen im Alkylteil, von

$Z_1$ und $Z_2$ eines Methyl und das andere Wasserstoff und

$X_1$ den Säurerest einer Sauerstoff enthaltenden anorganischen Säure

bedeuten, besteht.

2. Hilfsmittelgemisch gemäss Anspruch 1, dadurch gekennzeichnet, dass in Formel (1) X den Säurerest von Maleinsäure, Bernsteinsäure oder Sulfobernsteinsäure bedeutet.

3. Hilfsmittelgemisch gemäss einem der Ansprüche 1 und 2, dadurch gekennzeichnet, dass in Formel (1) s 4 bis 8 und p 10 bis 15 sind.

4. Hilfsmittelgemisch gemäss einem der Ansprüche 1 bis 3, dadurch gekennzeichnet, dass in Formel (2) $X_1$ den Schwefelsäurerest bedeutet.

5. Hilfsmittelgemisch gemäss einem der Ansprüche 1 bis 4, dadurch gekennzeichnet, dass in Formel (2) m 4 bis 8 und n 6 bis 12 sind.

6. Hilfsmittelgemisch gemäss einem der Ansprüche 1 bis 5, dadurch gekennzeichnet, dass in den Formeln (1) und (2) R und $R_1$, unabhängig voneinander, je einen Alkyl- oder Alkenylrest mit 8 bis 18 Kohlenstoffatomen bedeuten.

7. Hilfsmittelgemisch gemäss einem der Ansprüche 1 bis 6, dadurch gekennzeichnet, dass sich die sauren Ester der Formeln (1) und (2) von Fettalkoholmischethern ableiten, die aus 20 bis 55 Gew.-% sich von Ethylenoxid und 80 bis 45 sich von Propylenoxid ableitenden Einheiten aufgebaut sind.

8. Hilfsmittelgemisch gemäss einem der Ansprüche 1 bis 7, dadurch gekennzeichnet, dass es mindestens einen sauren Ester der Formel

$$R'-O-(CH_2CH_2O)_{s_1}-(CH_2-\underset{\displaystyle CH_3}{\underset{|}{CH}}O)_{p_1}-X' \qquad (3)$$

enthält, worin

R' Alkyl mit 8 bis 18 Kohlenstoffatomen,

X' den Maleinsäurerest oder den Sulfobernsteinsäurerest,

$s_1$ 4 bis 8 und $p_1$ 10 bis 15

bedeuten.

9. Hilfsmittelgemisch gemäss einem der Ansprüche 1 bis 8, dadurch gekennzeichnet, dass es einen sauren Ester der Formel

$$R_2-O-(CH_2CH_2O)_{m_1}-(CH_2-\underset{\displaystyle CH_3}{\underset{|}{CH}}O)_{n_1}-SO_3H \qquad (4)$$

enthält, worin

$R_2$ Alkyl mit 8 bis 18 Kohlenstoffatomen,

$m_1$ 4 bis 8 und $n_1$ 6 bis 12

bedeuten.

10. Hilfsmittelgemisch gemäss einem der Ansprüche 1 bis 9, dadurch gekennzeichnet, dass die sauren Ester der Formeln (1) und (2) in einem Gewichtsverhältnis von 9 : 1 bis 1 : 1 vorliegen.

11. Verfahren zum Färben von cellulosehaltigem Textilgut mit substantiven Farbstoffen oder Reaktivfarbstoffen durch Imprägnierung des Textilgutes mit einer wässrigen Färbeflotte und Fixierung der Farbstoffe durch Hitzeeinwirkung oder nach der Kaltverweilmethode, wobei die Färbeflotte ein Hilfsmittelgemisch enthält, das aus sauren Estern von Anlagerungsprodukten von Ethylenoxid und Propylenoxid besteht, dadurch gekennzeichnet, dass das Hilfsmittelgemisch aus mindestens einem sauren Ester der Formel

$$R-O-(CH_2CH_2O)_s-(\underset{\displaystyle Z_1}{\underset{|}{CH}}-\underset{\displaystyle Z_2}{\underset{|}{CH}}-O)_p-X \qquad (1)$$

worin

s 3 bis 10, p 5 bis 15,

R einen aliphatischen Rest mit mindestens 6 Kohlenstoffatomen, von

$Z_1$ und $Z_2$ eines Methyl und das andere Wasserstoff und

X den Säurerest einer niederen aliphatischen Dicarbonsäure

bedeuten und mindestens einem sauren Ester der Formel

$$R_1-O-(CH_2CH_2O)_m-(\underset{Z_1}{CH}-\underset{Z_2}{CH}-O)_n-X_1 \quad (2)$$

worin

m 3 bis 10, n 5 bis 15,

$R_1$ einen aliphatischen Rest mit mindestens 6 Kohlenstoffatomen oder Alkylphenyl mit 4 bis 16 Kohlenstoffatomen im Alkylteil, von

$Z_1$ und $Z_2$ eines Methyl und das andere Wasserstoff und

$X_1$ den Säurerest einer Sauerstoff enthaltenden anorganischen Säure

bedeuten, besteht.

12. Verfahren gemäss Anspruch 11, dadurch gekennzeichnet, dass die Imprägnierung durch Klotzen erfolgt.

13. Verfahren gemäss einem der Ansprüche 11 und 12, dadurch gekennzeichnet, dass die Fixierung der Farbstoffe nach der Kaltverweilmethode erfolgt.

14. Verfahren gemäss einem der Ansprüche 11 und 12, dadurch gekennzeichnet, dass die Fixierung der Farbstoffe durch Dämpfen erfolgt.

**Claims**

1. An assistant mixture of acid esters of adducts of ethylene oxide and propylene oxide, characterized in that the mixture consists of at least one acid ester of the formula

$$R-O-(CH_2CH_2O)_s-(\underset{Z_1}{CH}-\underset{Z_2}{CH}-O)_p-X \quad (1)$$

in which

s is 3 to 10, p is 5 to 15,

R is an aliphatic radical having at least 6 carbon atoms, one of

$Z_1$ and $Z_2$ is methyl and the other is hydrogen and

X is the acid radical of a lower aliphatic dicarboxylic acid, and at least one acid ester of the formula

$$R_1-O-(CH_2CH_2O)_m-(\underset{Z_1}{CH}-\underset{Z_2}{CH}-O)_n-X_1 \quad (2)$$

in which

m is 3 to 10, n is 5 to 15,

$R_1$ is an aliphatic radical having at least 6 carbon atoms or alkylphenyl having 4 to 16 carbon atoms in the alkyl moiety, one of

$Z_1$ and $Z_2$ is methyl and the other is hydrogen and

$X_1$ is the acid radical of an oxygen-containing inorganic acid.

2. An assistant mixture according to claim 1, characterized in that in formula (1) X is the acid radical of maleic acid, succinic acid or sulfosuccinic acid.

3. An assistant mixture according one of claims 1 and 2, characterized in that in formula (1) s is 4 to 8 and p is 10 to 15.

4. An assistant mixture according one of claims 1 to 3, characterized in that in the formula (2) $X_1$ is the sulfuric acid radical.

5. An assistant mixture according one of claims 1 to 4, characterized in that in the formula (2) m is 4 to 8 and n is 6 to 12.

6. An assistant mixture according one of claims 1 to 5, characterized in that in the formulae (1) and (2) R and $R_1$ independently of one another are each an alkyl or alkenyl radical having 8 to 18 carbon atoms.

7. An assistant mixture according to one of claims 1 to 6, characterized in that the acid esters of the formulae (1) and (2) are derived from fatty alcohol mixed ethers composed of 20 to 55 % by weight of units derived from ethylene oxide and 80 to 45 % by weight of units derived from propylene oxide.

8. Assistant mixture according to one of Claims 1 to 7, characterized in that it contains at least one acid ester of the formula

$$R'-O-(CH_2CH_2O)_{s_1}-(CH_2-\underset{CH_3}{CHO})_{p_1}-X' \qquad (3)$$

in which

$R'$ is alkyl having 8 to 18 carbon atoms,

$X'$ is the maleic acid radical or the sulfosuccinic acid radical,

$s_1$ is 4 to 8 and $p_1$ is 10 to 15.

9. Assistant mixture according to one of claims 1 to 8, characterized in that it contains an acid ester of the formula

$$R_2-O-(CH_2CH_2O)_{m_1}-(CH_2-\underset{CH_3}{CHO})_{n_1}-SO_3H \qquad (4)$$

in which

$R_2$ is alkyl having 8 to 18 carbon atoms,

$m_1$ is 4 to 8 and $n_1$ is 6 to 12.

10. Assistant mixture according to one of claims 1 to 9, characterized in that the acid esters of the formulae (1) and (2) are present in a weight ratio of 9 : 1 to 1 : 1.

11. Process for dyeing cellulose-containing textile material with substantive dyes or reactive dyes by impregnating the textile material with an aqueous dye liquor and fixing the dyes by the application of heat or by the cold pad-batch method, where the dye liquor contains an assistant mixture consisting of acid esters of adducts of ethylene oxide and propylene oxide, characterized in that the assistant mixture consists of at least one acid ester of the formula

$$R-O-(CH_2CH_2O)_s-(\underset{Z_1}{CH}-\underset{Z_2}{CH}-O)_p-X \qquad (1)$$

in which

s 3 to 10, p is 5 to 15,

R is an aliphatic radical having at least 6 carbon atoms, one of

$Z_1$ and $Z_2$ is methyl and the other is hydrogen and

X is the acid radical of a lower aliphatic dicarboxylic acid, and at least one acid ester of the formula

$$R_1-O-(CH_2CH_2O)_m-(\underset{Z_1}{CH}-\underset{Z_2}{CH}-O)_n-X_1 \qquad (2)$$

in which

m is 3 to 10, n is 5 to 15,

$R_1$ is an aliphatic radical having at least 6 carbon atoms or alkylphenyl having 4 to 16 carbon atoms in the alkyl moiety, one of

$Z_1$ and $Z_2$ is methyl and the other is hydrogen and

$X_1$ is the acid radical of an oxygen-containing inorganic acid.

12. Process according to claim 11, characterized in that the impregnation is effected by padding.

13. Process according to one of claims 11 and 12, characterized in that the fixation of the dyes is effected by the cold pad-batch method.

14. Process according to one of claims 11 and 12, characterized in that the fixation of the dyes is effected by steaming.

**Revendications**

1. Mélange d'adjuvants constitué d'esters acides de produits d'addition de l'oxyde d'éthylène et de l'oxyde de propylène, caractérisé en ce que le mélange est constitué d'au moins un ester acide de formule

$$R-O-(CH_2CH_2O)_s-(\underset{Z_1}{CH}-\underset{Z_2}{CH}-O)_p-X \qquad (1)$$

dans laquelle
s vaut 3 à 10, p vaut 5 à 15,
R représente un reste aliphatique avec au moins 6 atomes de carbone,
l'un de $Z_1$ et $Z_2$ représente un groupe méthyle et l'autre un hydrogène, et
X représente le reste acide d'un acide dicarboxylique aliphatique inférieur, et d'au moins un ester acide de formule

$$R_1-O-(CH_2CH_2O)_m-(\underset{Z_1}{\underset{|}{CH}}-\underset{Z_2}{\underset{|}{CH}}-O)_n-X_1 \qquad (2)$$

dans laquelle
m vaut 3 à 10, n vaut 5 à 15,
$R_1$ représente un reste aliphatique avec au moins 6 atomes de carbone, ou un reste alkylphényle avec 4 à 16 atomes de carbone dans la partie alkyle, l'un de $Z_1$ et $Z_2$ représente un groupe méthyle et l'autre un hydrogène, et
$X_1$ représente le reste acide d'un acide minéral contenant de l'oxygène.

2. Mélange d'adjuvants selon la revendication 1, caractérisé en ce que dans la formule (1) X représente un reste acide d'acide maléique, d'acide succinique ou d'acide sulfosuccinique.

3. Mélange d'adjuvants selon l'une des revendications 1 et 2, caractérisé en ce que dans la formule (1), s vaut 4 à 8 et p vaut 10 à 15.

4. Mélange d'adjuvants selon l'une des revendications 1 à 3, caractérisé en ce que dans la formule (2) $X_1$ représente un reste d'acide sulfurique.

5. Mélange d'adjuvants selon l'une des revendications 1 à 4, caractérisé en ce que dans la formule (2), m vaut 4 à 8 et n vaut 6 à 12.

6. Mélange d'adjuvants selon l'une des revendications 1 à 5, caractérisé en ce que dans les formules (1) et (2) R et $R_1$ représentent, chacun indépendamment l'un de l'autre, un reste alkyle ou alcényle, avec 8 à 18 atomes de carbone.

7. Mélange d'adjuvants selon l'une des revendications 1 à 6, caractérisé en ce que les esters acides des formules (1) et (2) dérivent d'éthers mixtes d'alcools gras, qui sont constitués de 20 à 55 % en poids de motifs dérivés de l'oxyde d'éthylène et de 80 à 45 % en poids de motifs dérivés de l'oxyde de propylène.

8. Mélange d'adjuvants selon l'une des revendications 1 à 7, caractérisé en ce qu'il contient au moins un ester acide de formule

$$R'-O-(CH_2CH_2O)_{s_1}-(CH_2-\underset{CH_3}{\underset{|}{CH}}O)_{p_1}-X' \qquad (3)$$

dans laquelle
R' représente un groupe alkyle comprenant 8 à 18 atomes de carbone,
X' représente un reste d'acide maléique ou d'acide sulfosuccinique,
$s_1$ vaut 4 à 8 et $p_1$ vaut 10 à 15.

9. Mélange d'adjuvants selon l'une des revendications 1 à 8, caractérisé en ce qu'il contient un ester acide de formule

$$R_2-O-(CH_2CH_2O)_{m_1}-(CH_2-\underset{CH_3}{\underset{|}{CH}}O)_{n_1}-SO_3H \qquad (4)$$

dans laquelle
$R_2$ représente un groupe alkyle comprenant 8 à 18 atomes de carbone,
$m_1$ vaut 4 à 8 et $n_1$ vaut 6 à 12.

10. Mélange d'adjuvants selon l'une des revendications 1 à 9, caractérisé en ce que les esters acides de formules (1) et (2) sont présents dans un rapport en poids de 9 : 1 à 1 : 1.

11. Procédé pour la teinture de matières textiles cellulosiques avec des colorants substantifs ou des colorants réactifs, par imprégnation des matières textiles avec un bain de teinture aqueux et fixage du colorant par action de la chaleur ou par abandon à froid, le bain de teinture contenant un mélange d'adjuvants qui est constitué d'esters acides de produits d'addition de l'oxyde d'éthylène et de l'oxyde de propylène, caractérisé en ce que le mélange d'adjuvants est constitué d'au moins un ester acide de formule

$$R\text{-}O\text{-}(CH_2CH_2O)_s\text{-}(\underset{Z_1}{CH}\text{-}\underset{Z_2}{CH}\text{-}O)_p\text{-}X \qquad (1)$$

dans laquelle
s vaut 3 à 10, p vaut 5 à 15,
R représente un reste aliphatique avec au moins 6 atomes de carbone, l'un de $Z_1$ et $Z_2$ représente un groupe méthyle et l'autre un hydrogène, et
X représente le reste acide d'un acide dicarboxylique aliphatique inférieur, et d'au moins un ester acide de formule

$$R_1\text{-}O\text{-}(CH_2CH_2O)_m\text{-}(\underset{Z_1}{CH}\text{-}\underset{Z_2}{CH}\text{-}O)_n\text{-}X_1 \qquad (2)$$

dans laquelle
m vaut 3 à 10, n vaut 5 à 15,
$R_1$ représente un reste aliphatique avec au moins 6 atomes de carbone, ou un reste alkylphényle avec 4 à 16 atomes de carbone dans la partie alkyle, l'un de $Z_1$ et $Z_2$ représente un groupe méthyle et l'autre un hydrogène, et
$X_1$ représente le reste acide d'un acide minéral contenant de l'oxygène.

12. Procédé selon la revendication 11, caractérisé en ce que l'imprégnation s'effectue par foulardage.

13. Procédé selon la revendication 11 ou 12, caractérisé en ce que le fixage des colorants est effectué par abandon à froid.

14. Procédé selon la revendication 11 ou 12, caractérisé en ce que le fixage des colorants est effectué par vaporisage.